# EUROPEAN PATENT APPLICATION

(11) **EP 1 558 009 A1**
(43) Date of publication of application: **27.07.2005**
(21) Application number: 04001313.8
(22) Date of filing: 22.01.2004
(51) Int. Cl.: H04M 1/22, H01J 65/08, H01H 13/70

(54) **Portable electronic equipment having an illuminated area**

(71) Applicant: Sony Ericsson Mobile Communications AB, 221 88 Lund (SE)
(72) Inventor: Malthe, Anders, 237 33 Bjärred (SE); Risberg, Nils, 238 31 Oxie (SE)
(74) Representative: Dahnér, Christer

(57) **Abstract**

The present invention is directed towards a portable electronic equipment (10) comprising an element for providing a constantly illuminated area (16)

## Description

### TECHNICAL FIELD OF THE INVENTION

The present invention relates to the field of portable electronic equipment, in particular to such equipment provided for communication and more particularly to such communication equipment including a light indicator element for illuminating an area thereof.

### DESCRIPTION OF RELATED ART

It is often desirable to provide portable electronic equipment, such as cellular phones, with illuminated areas, typically buttons such that a user may be able to see the buttons also in a dark environment. In conventional equipment, the buttons is often partly transparent so that a part transmit light for instance in the form of a digit, so that a user can see what digit corresponds to which button even in a dark environment. Of course, illumination is typically also provided for other areas than buttons such as the display area.

Today, the illumination is typically made by providing the transparent buttons into holes in a front panel of the equipment. The illumination is typically provided by means of backlighting, which typically contains a light source such as a light emitting diode, called a LED that may have different colours, for instance green light. To save power, the illumination (backlighting) is usually turned off until a user presses a button or activates the equipment in another way. Because of this, it is sometimes hard for a user to see which button to press, at least before the backlighting is turned on. This often leads to the wrong button being pressed, which of course is a problem.

Yet another problem is that it is difficult or almost impossible to be able to provide constantly illuminated areas (buttons and other areas) since power consumption will also be a problem. Of course, backlighting also requires transparent areas to work, which in some cases may be a problem, for instance if one wants to light a label or the like, which is normally not transparent.

Another disadvantage of known portable electronic equipment is also that they light up all buttons, or at least unnecessary many buttons so that it still is difficult for a user in a dark environment to focus on the proper button, at least fast enough, for instance when answering a phone call in a dark environment. Since typically only a limited number of buttons are required at a particular moment, for instance the answering button only, this is often a disadvantage. Moreover, often illumination is too strong so that it is difficult for a user to adapt his eyes in a dark environment, so that sight will be destroyed for instance when answering a call because of the too powerful illumination.

Often this also is not desirable for the design, since because of mechanical reasons it may be problems or increasing costs during manufacturing to provide light sources for illumination of many buttons. Typically this may be even a greater problem if light of different colours are required/desired to illuminate buttons with different colours.

Thus, there is a need for a portable electronic equipment which provides selected areas therof to be constantly illuminated.

### SUMMARY OF THE INVENTION

The present invention is therefore directed towards solving the problem of providing a portable electronic equipment having a light emitting element for illuminating a selected area, which provide constant illumination of the selected area.

One object of the present invention is thus directed towards providing a portable electronic equipment with a light emitting element for constantly illuminating a selected area.

According to a first aspect of the present invention, this object is achieved by a portable electronic equipment comprising:
a first light emitting element, wherein said first light emitting element is located such that said at least one area can be selected to be constantly illuminated by means of said light emitting element, wherein said first light emitting element is arranged to illuminate said at least one selected area.

A second aspect of the present invention includes the features of the first aspect, wherein said first light emitting element contains elements arranged to illuminate said at least one selected area, without external power required.

A third aspect of the present invention includes the features of the second aspect, wherein said first light emitting element comprises a container on an inside provided with a phosforescent substance as a coating, and an electron releasing source, in particular a traser, which causes the phosphorescent coating to glow.

A fourth aspect of the present invention includes the features of the second or the third aspect, wherein said equipment further comprises a waveguide element located between a second light emitting element and a button, wherein said second light emitting element is a light emitting diode (LED).

A fifth aspect of the present invention includes the features of any one of the previous aspects, wherein said button is essentially transparent.

A sixth aspect of the present invention includes the features of any one of the previous aspects, wherein the second light emitting element is a light emitting diode (LED), or EL-film.

A seventh aspect of the present invention includes the features of the any one of the previous aspects, wherein the colours that the light emitting element emits are at least red or green.

An eight aspect of the present invention includes the aspect of any one of the previous aspects wherein the equipment is a cellular phone, a smart phone or a communicator.

The present invention has many advantages, one being that no external power is required for constant illumination of a selected area. The invention can be used for illumination of any part of a portable electronic equipment or an accessory thereto, for instance, screens, logotypes, connectors, and decoration elements.

Yet another advantage with the present invention, according to an embodiment thereof, is that the portable electronic equipment can also have the possibility of special visual effects such as multi-colour illumination. Almost any colour is possible to provide by means of the present invention.

Yet another advantage with the present invention is that constant illumination makes it easier to see and find the portable electronic equipment in a dark environment if it is in stand-by mode, turned-off, or if the power source, e.g. a chargeable battery is discharged or disconnected, i. e. the portable electronic equipment is in a mode without any powered illumination turned on.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The present invention will now be described in more detail in relation to the enclosed drawings, in which:
Fig. 1 is a schematic view illustrating a portable electronic equipment according to an embodiment of the present invention, which includes a button,
Fig. 2 is a cross section of the button on the line A-A of Fig. 1.

### DETAILED DESCRIPTION OF EMBODIMENTS

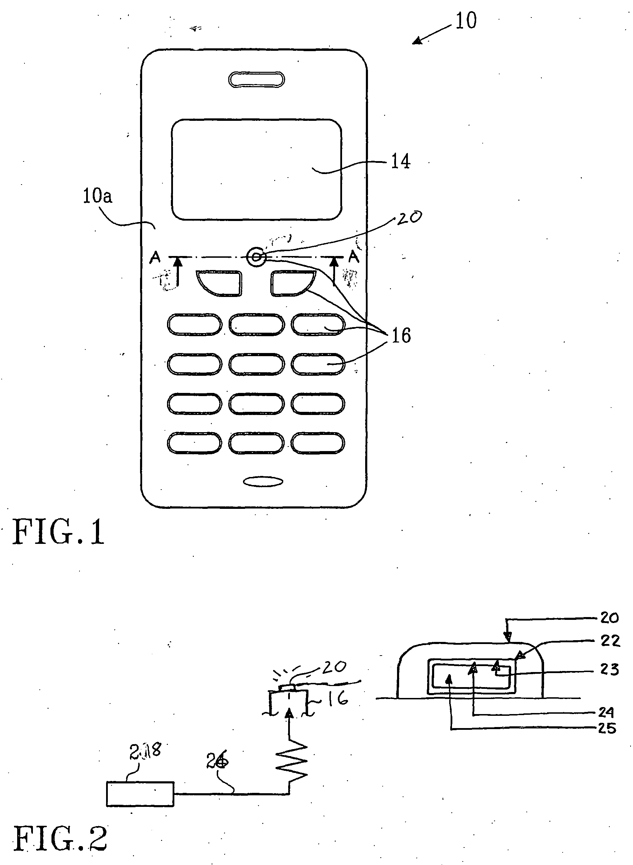

A portable electronic equipment 10 according to an embodiment of the invention is shown in Fig. 1. In a preferred embodiment, the portable electronic equipment 10 is a cellular phone having an antenna (not shown), a display 14 and operating buttons 16, which are partly transparent. It should be realised that more than one button 16 being non-semi-transparent can be implemented even if not shown in Fig. 1.

Now is referred to Fig. 2 illustrating a cross-section taken along line A-A in Fig. 1. This figure shows the same embodiment as illustrated in Fig. 1.

The cellular phone 10 further comprises a first light emitting element 20, located such that at least one area 16, herein one of the buttons 16 can be constantly illuminated by means of the first light emitting element 20. The first light emitting element 20 contains a container 22 (see expanded view to the right in Fig. 2), which on an inside 23 is provided with a phosforescent substance 24 as a coating, and an electron releasing source 25, herein a traser, which causes the phosforescent coating 24 to glow and emits a particular colour, for instance green light without any external power required. In this way, the selected area 16 can easily be constantly illuminated without powering problems and further advantages which will be given below.

The invention will now be further described by way of an example of operation thereof.

During operation, light will be transmitted from the light emitting element 20, which is properly adapted in terms of refractive index, surface curvature (for incident light) etc and located such that a user can easily see the light coming from the button 16.

The operational principle of the traser is in many parts similar to the way a fluorescent tube works. The phosforescent coating 24 is bombarded with electrons e- which thereby causes it to light up. In a fluorescent tube, this is provided when an inert gas inside the tube is ionised by means of electrical current applied.

The traser, is however, no filled with an inert gas like the above described fluorescent tube, but rather contain gaseous tritium, which is a radioactive isotope. Tritium releases electrons as it decays naturally which cause the phosforescent coating to glow. This process runs for quite a long time, since natural decay typically causes the number of tritium atoms in the traser to fall by half within about 12 years.

Even if the first light emitting element 20 has been described containing a particular traser, other trasers, or similar light emitting elements based on similar principles, i. e. they do not require external power, can be implemented for a person skilled in the art without departing from the invention.

According to alternate embodiments of the invention (not shown in detail), there can be more than one first light emitting element 20 provided on a plurality of buttons or other selected areas 16.

For instance, traser light sources are available in various colours such as green, orange, blue, red and white colour. The brightness depends greatly on the pressure at which they are filled, the shape and colour of the light source. Typically trasers can contain colours at a maximum pressure of 2,5 bars and the geometric shape can be selected such that light efficieny is maximised. Examples of brightness values are: 100 microlamberts for a cylindrical light source, diameter 0,65 mm, and 750 microlamberts for a diameter of 5 mm.

The cellular phone 10 may further comprise a second optional light emitting element 28, herein a light emitting diode (LED) located remote from the transparent buttons 16. The second light emitting element 28 can for instance be located in the cellular phone 10 in a side part 10a thereof sufficiently remote from the display 14, and preferably also remote from the first light emitting element 20 because these areas normally suffer from small space because of circuitry required for driving display 14. The second light emitting element 28 is further connected to a first wave guide element 26 located between the second light emitting element 28 and the transparent button 16. It is also possible according to an alternate embodiment of the invention that the second light emitting element 28 is located directly under the button 16, provided there is space enough, even if this is not illustrated. The second light emitting element 28 emits at least one colour, preferably more. Examples of colours are green, red and blue.

The second light emitting element can be arranged to illuminate different selected areas constantly upon selection, typically by the user. This second light emitting element requires power supply circuitry if it is a LED, but other solutions may still be possible. In case of a LED, power consumption can still be low, since only a small selected area is illuminated, not the entire set of keys and the display.

For instance, if the cellular phone is used in a dark environment, only the answering button, can be constantly illuminated, such that it will be easy for a user to find the proper button quickly. Also colour combinations such as green light for answering key and red for terminating a call can be possible to implement. For a user to be able to customise his phone, it may be possible to provide the phone with attachable/detachable first light emitting element arranged such that the user for instance can snap it on the selected key. Since different fastening elements are known for the person skilled in the art, they will not be described herein in more detail.

This is a great advantage with the present invention, since conventional cellular phones typically does not provide these kinds of special effects.

In the drawing figures, the transparent button is a joystick button; however, it is obvious for a skilled person that any other suitable button could also be employed in combination with the joy stick button.

Moreover, the button does not need to be transparent, or essentially transparent, but could also be semi-transparent or non-transparent. Non-transparent buttons of course could not benefit from the second light emitting element, but only the first.

The wave guide element may not be required, instead the light emitting element could be located directly under the transparent button(s) or adjacent the same providing light from a suitable side thereof.

The wave guide element is typically an optical fibre, but could also include a mirror element or any other suitable guiding element, provided the transmission of light is sufficient.

The term "remote location" includes any suitable location being sufficiently remote to accommodate the light emitting element without negatively influencing the operation of the cellular phone, for instance as regards space requirements in a particular area thereof.

It should be realised that cellular phone is just one type of device in which the invention can be implemented. It can just as well be provided in other types of portable electronic devices such as a lap top computer, a palm top computer, an electronic organizer, a smart-phone, a communicator, a calculator or a gaming machine.

The screen can be any suitable screen including touch screens onto which it is possible to enter information directly onto the screen such as selection of functions or applications and controlling these functions and applications.

There are more ways in which the invention can be varied. Therefore the invention is only to be limited by the accompanying claims.

## Claims

1. A portable electronic equipment comprising a first light emitting element (20), wherein said first light emitting element (20) is located such that said at least one area (16) can be selected to be constantly illuminated by means of said light emitting element (20), wherein said first light emitting element (20) is arranged to illuminate said at least one selected area (16).

2. The equipment of claim 1, wherein said first light emitting element (20) is arranged to illuminate said at least one selected area (16), without external power required.

3. The equipment of claim 2, wherein said first light emitting element (20) comprises a container (22) on an inside (23) provided with a phosforescent substance (24) as a coating, and an electron releasing source (25), in particular a traser, which causes the phosphorescent coating (24) to glow.

4. The equipment according to claim 2 or 3, further comprising a waveguide element (26) located between a second light emitting element (28) and said button (16), wherein said second light emitting element (28) is a light emitting diode (LED).

5. The equipment according to any one of the preceding claims, wherein said area (16) is essentially transparent.

6. The equipment of claim 4, wherein the second light emitting element (28) is a light emitting diode (LED).

7. The equipment according to claim 6, wherein said second light emitting element (28) is a light emitting diode (LED), emitting at least two colours, such as red, green and/or blue.

8. The equipment according to any one of the claims 1-7, wherein the equipment (10) is a cellular phone, a smart phone or a communicator.
